**Europäisches Patentamt**

**European Patent Office**

**Office européen des brevets**

(19)

(11) Veröffentlichungsnummer: **0 582 826 B1**

(12) # EUROPÄISCHE PATENTSCHRIFT

(45) Veröffentlichungstag der Patentschrift: **04.10.95**

(51) Int. Cl.6: **B21B 37/48**

(21) Anmeldenummer: **93110623.1**

(22) Anmeldetag: **02.07.93**

(54) **Regeleinrichtung für den Antrieb eines Haspels.**

(30) Priorität: **13.07.92 DE 4223002**

(43) Veröffentlichungstag der Anmeldung:
**16.02.94 Patentblatt 94/07**

(45) Bekanntmachung des Hinweises auf die
Patenterteilung:
**04.10.95 Patentblatt 95/40**

(84) Benannte Vertragsstaaten:
**AT DE FR GB IT SE**

(56) Entgegenhaltungen:
**EP-A- 0 477 422**
**DE-A- 4 010 352**
**FR-A- 2 201 142**

(73) Patentinhaber: **SIEMENS AKTIENGESELL-
SCHAFT
Wittelsbacherplatz 2
D-80333 München (DE)**

(72) Erfinder: **Tomasic, Marko, Dipl.-Ing.
Obere Büch 18
D-91054 Buckenhof (DE)**
Erfinder: **Teltsch, Erwin, Dipl.-Ing.
Ebersbacher Weg 25
D-91077 Neunkirchen (DE)**
Erfinder: **Schäfer, Uwe, Dipl.-Ing.
Dorfstrasse 18
D-91096 Möhrendorf-Kleinseebach (DE)**

## Beschreibung

Die Erfindung betrifft eine Regeleinrichtung für den Antrieb eines Haspels, bei dem sich bei jeder Umdrehung periodisch wiederholende, umfangsabhängige Störungen, insbesondere Zugschwankungen, auftreten, mit einer Einrichtung zur drehwinkelabhängigen Erfassung von Abweichungen eines störungsbehafteten Signals von einem vorgegebenen Wert und mit einer Einrichtung zur Störungskompensation, die in Abhängigkeit von den erfaßten Abweichungen ein demgegenüber zeitlich vorverschobenes Kompensationssignal zur Vorsteuerung der Regeleinrichtung erzeugt.

Bei einer derartigen, aus der DE-A-4 010 352 bekannten Regeleinrichtung werden periodisch auftretende Haspelzugschwankungen zusammen mit dem jeweils momentanen Drehwinkel des Haspels erfaßt. Ausgehend von den erfaßten Haspelzugschwankungen wird deren periodische Wiederholung vorausberechnet und zur Vorsteuerung der Regelung des Haspels im Sinne einer Kompensation der Haspelzugschwankungen herangezogen. Wie die Vorsteuerung im einzelnen erfolgt, ist der Druckschrift jedoch nicht zu entnehmen.

Aus der EP-A-0 477 422 ist ebenfalls eine Regeleinrichtung für den Antrieb eines Haspels bekannt, die dafür sorgt, daß ein konstanter oder vorgegebener Zugverlauf in der aufzuwickelnden Warenbahn auftritt. Eine Kompensation von umfangsabhängigen und bei jeder Umdrehung periodisch auftretenden Störungen ist nicht vorgesehen.

Beim Wickeln von Stahlbändern ergibt sich das Problem, daß durch das Einspannen des Stahlbandes im Klemmschlitz eine Überhöhung am Haspel entsteht, die beim Auf- und Abwickeln des Bandes zu sprungförmig sich ändernden Haspeldurchmessern führt. Dieser sich schlagartig ändernde Haspeldurchmesser bedeutet eine Abweichung von einem kontinuierlich verlaufenden, der Sollwertvorgabe zugrunde gelegten Durchmesser. Die Änderungen des Durchmessers wiederum verursachen Abweichungen in der Bandgeschwindigkeit. Infolgedessen treten Schwankungen im Bandzug auf, die wiederum zu unerwünschten Dickenfehlern führen können. Die Störung im Zugverlauf wiederholt sich periodisch bei jeder Umdrehung. Damit ist ihre Frequenz drehzahlabhängig.

Die Aufgabe der vorliegenden Erfindung besteht darin, bei einer Regeleinrichtung der eingangs genannten Art die sich bei jeder Drehung periodisch wiederholenden Störungen zu kompensieren.

Diese Aufgabe wird gemäß der Erfindung dadurch gelöst, daß bei der Regeleinrichtung der eingangs angegebenen Art die Einrichtung zur Störungskompensation zur Erzeugung des Kompensationssignals die Abweichungen drehwinkelabhängig für mehrere, aus einer Aufteilung jeder Gesamtumdrehung des Haspels resultierende Drehwinkelbereiche integriert.

Schaltungstechnisch kann dabei für jeden Drehwinkelbereich Von z.B. 15° ein Integrator vorgesehen sein. Die Eingänge dieser Integratoren sind dann drehwinkelabhängig an einem der jeweiligen Abweichung proportionalen Signal anschließbar. Die Ausgangssignale werden zeitlich vorverschoben, z.B. je nach dem einzelnen Totzeitverhalten als Kompensationssignale an die Regelung gegeben. Als Abweichungssignale können dabei z.B. Abweichungen in der Zugkraft, im Drehmoment und/oder im Haspeldurchmesser benutzt und dem jeweiligen Drehwinkelbereich zugeordnet werden. Die Ausgangssignale können einer Schaltung zur Signalbearbeitung zugeführt werden. Hier kann z.B. Interpolation, Ableitung, Zusammenfassung mehrerer Segmente, Glättung usw. durchgeführt und die so gebildeten Signale zur Kompensation benutzt werden.

Ist, wie im eingangs erwähnten Fall, die Amplitude der Störung auch drehzahlabhängig, kann dies auch dadurch berücksichtigt werden, daß die Amplitude der Kompensationssignale drehzahlabhängig verändert wird.

Anhand eines in der Zeichnung dargestellten Ausführungsbeispiels sei die Erfindung näher beschrieben; es zeigen:

Fig. 1 das Prinzipschaltbild der Gesamtanordnung und

Fig. 2 den Aufbau einer Schaltung zur Erzeugung von Kompensationssignalen.

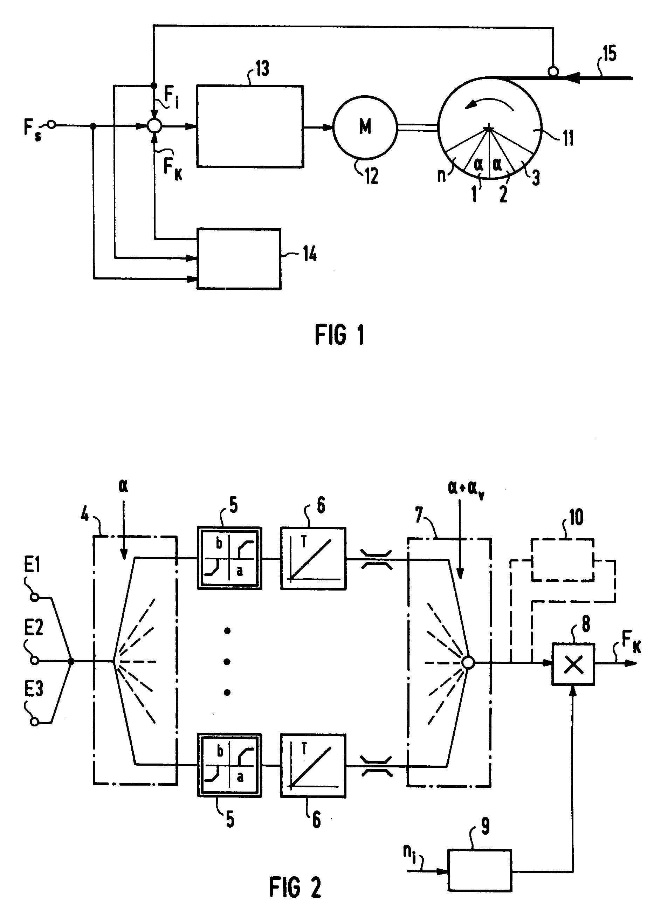

Wie aus Fig. 1 ersichtlich, soll auf einem Haspel 11 ein Stahlband 15 aufgewickelt werden. Zum Antrieb des Haspels 11 dient ein elektrischer Motor 12, der seine Ansteuerbefehle aus einer Regelung 13 erhält. Diese Regelung 13 für Zugkraft und Bandgeschwindigkeit erhält u.a. neben dem Sollwert für den Bandzug $F_s$ auch ein dem Istwert des Bandzuges $F_i$ proportionales Signal und verarbeitet diese Signale. Eine derartige Regelung ist insgesamt z.B. aus der eingangs genannten Patentanmeldung bekannt. Zusätzlich werden Soll- und Istwert des Bandzuges noch einer Kompensationsschaltung 14 zugeführt, die Kompensationswerte $F_K$ für die Regelung berechnet. Diese Kompensationswerte sind drehwinkelabhängig verschieden, d.h. jedem Umfangteil (Zone) 1, 2, 3 usw. bis n am Haspel 11 ist ein entsprechender Drehwinkelbereich $\alpha$ zugeordnet.

Umfangsabhängige Störungen, deren Frequenz drehzahlabhängig ist, können nicht mehr durch einen Integrator ausgeregelt werden, da der geschlossene Regelkreis eine zu geringe Eckfrequenz besitzt. Ist dagegen die Störung bekannt, kann durch eine geeignete Vorsteuerung dafür gesorgt werden, daß die Störkompensation zum richtigen Zeitpunkt aufgeschaltet wird. Unter der Voraussetzung, daß sich die Störung nur langsam ändert, kann davon ausgegangen werden, daß innerhalb zweier aufeinanderfolgender Umdrehungen die Störung an einem Ort nahezu konstant bleibt. Wird nun für diesen Ort ein Störintegrator eingesetzt, sieht er eine konstante Regelabweichung, die er durch Integration verringern kann. Es müssen für die n-Zonen am Umfang, d.h. für die n-Drehwinkelbereiche α auch n-Integratoren eingesetzt werden, die abhängig von der Winkelstellung den Regelfehler aufintegrieren. Es bildet sich dann die periodische Störung in den n-Integratorinhalten ab. Es können z.B. 24 Integratoren benutzt werden.

Da das System Totzeiten und die Regelung Tiefpaßverhalten besitzen, dürfen die Ausgänge der Integratoren nicht erst dann aufgeschaltet werden, wenn sich das System in ihrem Integrationsintervall befindet. Ihre Wirkung käme dann zu spät. Statt dessen muß um einen Vorhaltewinkel in die Zukunft geschaut werden. Dieser Vorhaltewinkel ergibt sich drehzahlabhängig zu

$$\alpha_v = T_v \cdot n_i + \alpha_o$$

bei $n_i$ die momentane Drehzahl des Haspels 11, $T_v$ die Vorhaltezeit und $\alpha$ O ein konstanter Offset-Winkel ist.

Fig. 2 zeigt die schaltungsmäßige Realisierung der vorstehend genannten Strategien. An den Eingängen E1, E2, E3 (Fig. 2) kann wahlweise ein der Differenz von Soll- und Istwert des Bandzuges $F_s$ - $F_i$, ein der Differenz von Momentsoll- und Momentistwert oder ein der Differenz zwischen Solldurchmesser und Istdurchmesser proportionales Signal angelegt werden, welches naturgemäß in jedem Drehwinkelbereich verschieden sein kann. Dieses Eingangs-Abweichungssignal wird drehwinkelabhängig mittels eines Multiplexers 4 den einzelnen Integratoren 6 mit der Zeitkonstante T aufgeschaltet. Damit nicht alle Störungen aufintegriert werden, ist den Integratoren jeweils noch ein Begrenzungsglied 5 vorgeschaltet, das ein Signal erst ab einem bestimmten Pegel durchläßt.

Die begrenzten Ausgänge der Integratoren 6 werden dann über einen Demultiplexer 7, der ebenfalls drehwinkelabhängig geschaltet wird, und zwar entsprechend der vorgenannten Beziehung, um einen Vorhaltewinkel $\alpha_v$ als jeweiliges Kompensationssignal $F_K$ auf die Regeleinrichtung 13 aufgegeben. Damit in der Folge der einzelnen Kompensationswerte keine zu großen Sprünge auftreten, kann es zweckmäßig sein, zwischen den einzelnen Werten zu glätten.

Abhängig von der Art des Eingangssignals (Zugkraft, Wellenmoment oder Durchmesser) kann auch eine Ableitung der Ausgänge der Integratoren zweckmäßig sein.

Hierzu kann eine zwischengeschaltete Signalbearbeitungsschaltung 10 dienen, diese ist gestrichelt angedeutet.

Da im speziellen Fall des Haspelschlags als periodische Störgröße auch die Amplitude drehzahlabhängig ist, wird das Kompensationssignal mit einer drehzahlabhängigen Funktion in einem Glied 8 gewichtet. Hierdurch werden die Integratoren entlastet und eine schnelle Anpassung an den tatsächlichen Störpegel durchgeführt. Dies geschieht durch drehzahlabhängige Aufschaltung $f = c \cdot n_i + \alpha$ über ein Rechenglied 9, wobei die Konstanten c und $\alpha$ u.a. die Integratornachführzeit und Normierungsgrößen enthalten. Erwähnt sei auch noch, daß die Integratoren so geschaltet sind, daß ein Gleichfehler unterdrückt wird. Statt der gezeigten Realisierung in Hardware, ist es auch möglich, die einzelnen Integratoren softwaremäßig auf einem oder mehreren Rechnern zu implementieren.

**Patentansprüche**

1.  Regeleinrichtung für den Antrieb eines Haspels (11), bei dem sich bei jeder Umdrehung periodisch wiederholende, umfangsabhängige Störungen, insbesondere Zugschwankungen, auftreten, mit einer Einrichtung zur drehwinkelabhängigen Erfassung von Abweichungen eines störungsbehafteten Signals ($F_i$) von einem vorgegebenen Wert ($F_s$) und mit einer Einrichtung (14) zur Störungskompensation, die in Abhängigkeit von den erfaßten Abweichungen ein demgegenüber zeitlich vorverschobenes Kompensationssignal ($F_K$) zur Vorsteuerung der Regeleinrichtung (13) erzeugt,
    **dadurch gekennzeichnet,**
    daß die Einrichtung (14) zur Erzeugung des Kompensationssignals ($F_K$) die Abweichungen drehwinkelabhängig für mehrere, aus einer Aufteilung jeder Gesamtumdrehung des Haspels (11) resultierende Drehwinkelbereiche ($\alpha$) integriert.

2.  Regeleinrichtung nach Anspruch 1,
    **dadurch gekennzeichnet,**
    daß jedem Drehwinkelbereich ($\alpha$) ein Integrator (6) zugeordnet ist und die Eingange der Integratoren (6) drehwinkelabhängig nacheinander mit einem der jeweiligen Abweichung proportionalen Signal beaufschlagt sind und daß die Ausgangswerte der Integratoren (6) zeitlich vorverschoben gegenüber den Eingangssignalen als Kompensationssignale ($F_K$) ausgegeben werden.

3.  Regeleinrichtung nach Anspruch 1 oder 2,
    **dadurch gekennzeichnet,**
    daß die Abweichungen in der Zugkraft, dem Drehmoment und/oder dem Haspeldurchmesser integriert werden.

4. Regeleinrichtung nach Anspruch 1, 2 oder 3, **gekennzeichnet durch** eine Einrichtung zur Glättung, insbesondere Interpolation, der Kompensationssignale ($F_K$).

5. Regeleinrichtung nach einem der Ansprüche 1 bis 4, **gekennzeichnet durch** eine Einrichtung (8, 9) zur drehzahlabhängigen Veränderung der Amplitude des Kompensationssignals ($F_K$).

6. Regeleinrichtung nach einem der Ansprüche 2 bis 5, **gekennzeichnet durch** eine Einrichtung (10) zur Bildung der Ableitung der Folge der Kompensationssignale ($F_K$) und zur Abgabe dieses Signals allein oder in Kombination mit den Ausgangswerten der Integratoren (6).

## Claims

1. A control device for driving a reel (11) in which circumference-dependent periodically repeating disturbances, more particularly deviations in tension, occur upon each revolution, comprising means for detecting, as a function of the angle of rotation, deviations of a disturbance-influenced signal ($F_i$) from a preset value ($F_s$) and comprising means (14) for disturbance compensation, which as a function of the detected deviations produces a compensating signal ($F_k$) for pre-controlling the control device (13), the compensating signal being advanced in time, characterised in that the means (14) for producing the compensating signal ($F_k$) integrates the deviations as a function of the angle of rotation for a plurality of angle-of-rotation segments ($\alpha$) resulting from a division of each overall rotation of the reel (11).

2. A control device according to claim 1, characterized in that an integrator (6) is associated with each angle-of-rotation segment ($\alpha$) and the inputs of the integrators (6) can be connected, as a function of the angle of rotation, in succession to a signal which is proportional to the respective deviation, and the output values of the integrators are output advanced in time with respect to the input signals as compensating signals ($F_k$).

3. A control device according to claim 1 or 2, characterized in that the deviations in the tensile force, torque and/or reel diameter are integrated.

4. A control device according to claim 1, 2 or 3, characterised by means for the smoothing, more particularly interpolation of the compensating signals ($F_k$).

5. A control device according to one of claims 1 to 4, characterised by an element (8, 9) for changing the amplitude of the compensating signal ($F_k$) as a function of the speed of rotation.

6. A control device according to one of claims 2 to 5, characterised by a device (10) for producing the differentiation of the sequence of the compensating signals ($F_k$) and for issuing the signals alone or in combination with the output values of the integrators (6).

## Revendications

1. Dispositif de régulation pour la motorisation d'un dévidoir (11) au niveau duquel des parasites périodiques, dépendants de la circonférence, en particulier des variations de traction, se produisent à chaque rotation, avec un dispositif permettant de détecter en fonction de l'angle d'orientation des écarts d'un signal comportant des parasites ($F_i$) par rapport à une valeur donnée ($F_s$) et avec un dispositif (14) de compensation de parasites, lequel produit en fonction des écarts détectés, de manière anticipée par rapport audit signal, un signal de compensation ($F_K$) pour piloter le dispositif de régulation (13), caractérisé en ce que le dispositif (14) permettant de produire le signal de compensation ($F_K$) intègre les écarts en fonction de l'angle d'orientation pour plusieurs sections d'angle d'orientation ($\alpha$) résultant d'une répartition de chaque rotation complète du dévidoir (11).

2. Dispositif de régulation selon la revendication 1, caractérisé en ce que l'on attribue à chaque section d'angle d'orientation ($\alpha$) un intégrateur (6) et l'on applique aux entrées des intégrateurs (6) en fonction de l'angle d'orientation successivement un signal proportionnel à l'écart respectif, et en ce que l'on sort les valeurs de sortie des intégrateurs (6) de manière anticipée par rapport aux signaux d'entrée comme signaux de compensation ($F_K$).

3. Dispositif de régulation selon la revendication 1 ou 2, caractérisé en ce que les écarts sont intégrés dans la force de traction, le couple et/ou le diamètre du dévidoir.

4. Dispositif de régulation selon la revendication 1, 2 ou 3, caractérisé par un dispositif permettant le lissage, en particulier l'interpolation, des signaux de compensation ($F_K$).

5. Dispositif de régulation selon l'une des revendications 1 à 4, caractérisé par un dispositif (8, 9) permettant de modifier l'amplitude du signal de compensation ($F_K$) en fonction de la vitesse de rotation.

6. Dispositif de régulation selon l'une des revendications 2 à 5, caractérisé par un dispositif (10) permettant de former la dérivation de la suite des signaux de compensation ($F_K$) et d'émettre ce signal seul ou en combinaison avec les valeurs de sortie des intégrateurs (6).

FIG 1

FIG 2